# EUROPÄISCHE PATENTSCHRIFT

(11) **EP 2 138 445 B1**
(45) Veröffentlichungstag und Bekanntmachung des Hinweises auf die Patenterteilung: **16.12.2015**
(21) Anmeldenummer: 09007317.2
(22) Anmeldetag: 02.06.2009
(51) Int. Cl.: B66F 9/20, B62B 5/06, B62D 51/02, B66F 9/075, B62D 51/00

(54) **Bedienkonsole für ein Flurförderzeug**
Operating console for an industrial truck
Console de commande pour un chariot de manutention

(30) Priorität: 27.06.2008 DE 102008030554
(43) Veröffentlichungstag der Anmeldung: 30.12.2009
(73) Patentinhaber: KION Warehouse Systems GmbH, 72766 Reutlingen (DE)
(72) Erfinder: Haspel, Volker, 72770 Reutlingen (DE)
(74) Vertreter: Geirhos, Johann

(56) Entgegenhaltungen:
- EP-A- 0 371 226
- EP-A- 0 538 697
- EP-A- 0 751 060
- EP-A- 1 867 549
- EP-A- 2 075 214
- US-A- 5 042 314
- US-A1- 2005 150 708

## Beschreibung

Die Erfindung betrifft eine Bedienkonsole für ein als Kommissioniergerät ausgebildetes Flurförderzeugs, wobei die Bedienkonsole an einem Bedienplatz einer Bedienperson des Flurförderzeugs, angeordnet ist und die Bedienkonsole mit einem Bedienelement zur Steuerung eines Fahrantriebs als erste Funktion des Flurförderzeugs und mindestens einem Bedienelemente zur Steuerung einer von einem Hubantrieb gebildeten Lasthandhabungsfunktionals zweite Funktion des Flurförderzeugs, sowie mit einem feststehenden Haltegriff versehen ist, wobei das Bedienelement zur Steuerung des Fahrantriebs mit dem Daumen einer einen Griffabschnitt des Haltegriffes umgreifenden Hand betätigbar ist.

Aus der EP 0 371 226 ist ein Deichselkopf für ein deichselgelenktes Flurförderzeug bekannt, bei dem der Fahrantrieb und der Hubantrieb mit dem Fingern einer Hand bedient werden können.

Die EP 0 538 697 A1 offenbart ein als Hubwagen ausgebildetes Flurförderzeug mit einer Lenkdeichsel als Bedieneinheit. Ein Deichselkopf der Lenkdeichsel ist mit drehbaren Griffen zur Steuerung des Fahrantriebs versehen. An einem mittigen, lenkbaren Deichselschaft der Lenkdeichsel sind Bedienelemente zur Steuerung des Hubantriebs angeordnet. Um im Mitgängerbetrieb, in dem die Bedienperson - wie in der Figur 1 der EP 0 538 697 A1 dargestellt - neben dem Hubwagen herläuft, die Vorwärtsfahrt des Hubwagens steuern zu können, sind in den seitlichen Deichselhörnern des Deichselkopfes zwei Bedienelemente angeordnet. Ein erstes Bedienelemente kann von dem Daumen und das zweite Bedienelement von den restlichen Fingern der das Deichselhorn umgreifenden Hand der Bedienperson betätigt werden.

Die beiden Bedienelemente steuern hierbei den Fahrantrieb in die Vorwärtsfahrt. Die Betätigung der beiden Bedienelemente stellt ein Sicherheitsfunktion dar, um ein unbeabsichtigtes oder versehentliches Betätigen des Fahrantriebs auszuschließen, wobei der Fahrantrieb nur dann in die Vorwärtsfahrt angesteuert wird, wenn beide Bedienelemente betätigt werden.

Bedienkonsolen für Flurförderzeuge, die Bestandteil eines Bedienpultes sind, müssen besonderen Anforderungen genügen, die sich aus den speziellen Einsatzbedingungen des Flurförderzeugs ergeben. Bei als Kommissioniergeräten mit einem anhebbaren Bedienplatz ausgebildeten Flurförderzeugen werden sämtliche Funktionen des Flurförderzeugs mit einem im Bereich des anhebbaren Bedienplatzes angeordneten Bedienpult gesteuert. An dem Bedienpult sind hierzu ein Bedienelement zur Steuerung des Fahrantriebs des Flurförderzeugs und ein Bedienelement zur Steuerung der Lasthandhabungsfunktion, insbesondere eines Hubantriebs, des Flurförderzeugs angeordnet. Darüber hinaus ist bei derartigen Flurförderzeugen eine Festhaltefunktion vorgesehen, wobei in der Regel an der Bedienkonsole bzw. dem Bedienpult ein Haltegriff angeordnet ist, an dem sich die Bedienperson zur sicheren Bedienung des Flurförderzeugs an dem Bedienpult festhalten kann.

Bei bekannten Bedienpulten ist hierzu eine Bedienkonsole vorgesehen, die einen Haltegriff aufweist, wobei im Umfeld des Haltegriffes das Bedienelement zur Steuerung des Fahrantriebs und das Bedienelement zur Steuerung der Lasthandhabungsfunktion, insbesondere eines Hubantriebs, des Flurförderzeugs angeordnet ist. Als Bedienelement zur Steuerung des Fahrantriebs ist es bekannt, ein von einem Daumen einer den Griffabschnitt des Haltegriffes umgreifenden Hand betätigbaren Drehschalter auszubilden. Das Bedienelement zur Steuerung der Lasthandhabungsfunktion, das von einem Drehschalter oder zwei Druckschaltern für das Heben und Senken gebildet sein kann, ist bei bekannten Bedienpulten getrennt von dem Haltegriff in dessen Umfeld derart angeordnet, dass es mit einem abgespreizten Zeigefinger und/oder abgespreiztem Mittelfinger der den Haltegriff umgreifenden Hand betätigt werden kann.

Bei derartigen Bedienpulten ist es erforderlich, dass zur Betätigung des Bedienelements zur Steuerung der Lasthandhabungsfunktion die Festhalteposition der den Haltegriff umgreifenden Hand der Bedienperson verändert oder verlassen und somit der Haltegriff losgelassen werden muss. Hierdurch wird die Festhaltemöglichkeit der Bedienperson bei der Betätigung des Bedienelements zur Steuerung der Lasthandhabungsfunktion eingeschränkt. Mit einer derartigen bekannten Bedienkonsole kann somit bei der gleichzeitigen Betätigung des Bedienelements für den Fahrantriebs sowie des Bedienelements für die Lasthandhabungsfunktion eine sichere Festhaltefunktion nicht erzielt werden, so dass ein sicherer Halt der Bedienperson bei der gleichzeitigen Betätigung der beiden Bedienelemente nicht gegeben ist.

Der vorliegenden Erfindung liegt die Aufgabe zugrunde, eine Bedienkonsole der eingangs genannten Art zur Verfügung zu stellen, die bei einer ergonomischen Betätigung der Bedienelemente eine verbesserte Festhaltefunktion aufweist.

Diese Aufgabe wird erfindungsgemäß dadurch gelöst, dass in dem Griffabschnitt des feststehenden Haltegriffs das Bedienelement zur Steuerung der von dem Hubantrieb gebildeten Lasthandhabungsfunktion derart angeordnet ist, dass das Bedienelement zur Steuerung der von dem Hubantrieb gebildeten Lasthandhabungsfunktion von dem den Griffabschnitt des Haltegriffs umgreifenden Zeigefinger und/oder dem Mittelfinger der den Griffabschnitt des Haltegriffs umgreifenden Hand betätigbar ist ohne eine Festhalteposition der den Griffabschnitt des Haltegriffs umgreifenden Hand verändern oder verlassen zu müssen, so dass die Bedienperson mit der den Griffabschnitt des feststehenden Haltegriffs umgreifenden Hand gleichzeitig den Fahrantrieb und den Hubantrieb steuern kann. Erfindungsgemäß ist somit das Bedienelement zur Steuerung der von der Lasthandhabungsfunktion gebildeten zweiten Funktion in den Griffabschnitt des Haltegriffes und somit den Festhaltebereich des feststehenden Haltegriffes integriert. Hierdurch kann das Bedienelement zur Steuerung der Lasthandhabungsfunktion von dem Zeigefinger und/oder dem Mittelfinger der den Griffabschnitt des Haltegriffs umgreifenden Hand betätigt werden ohne den Zeigefinger und/oder Mittelfinger von dem Griffabschnitt abspreizen zu müssen. Hierdurch kann das Bedienelement zur Steuerung der Lasthandhabungsfunktion mit dem den Griffabschnitt des Haltegriffes umgreifenden Zeigefinger und/oder Mittelfinger betätigt werden ohne die Festhalteposition der den Griffabschnitt des Haltegriffes umgreifenden Hand verändern oder verlassen zu müssen. Durch die erfindungsgemäße Anordnung des Bedienelements zur Steuerung der Lasthandhabungsfunktion an dem Griffabschnitt des feststehenden Haltegriffes können somit das Bedienelement zur Steuerung der als Fahrantrieb ausgebildeten ersten Funktion und das Bedienelement zur Steuerung der als Lasthandhabungsfunktion ausgebildeten zweiten Funktion gleichzeitig betätigt werden ohne die Festhaltefunktion der Bedienperson einzuschränken, wodurch die Festhaltefunktion auch bei der gleichzeitigen Betätigung beider Bedienelemente gewährleistet ist. Insgesamt wird somit eine Bedienkonsole zur Verfügung gestellt, die bei einer ergonomischen Betätigung der Bedienelemente eine verbesserte Festhaltefunktion aufweist.

Gemäß einer bevorzugten Ausgestaltungsform der Erfindung ist das Bedienelement zur Steuerung der ersten Funktion als Drehschalter ausgebildet, dessen Drehachse im Wesentlichen parallel oder koaxial zur Längsachse des Griffabschnittes des Haltegriffes in einer im Wesentlichen horizontalen Betätigungsebene angeordnet ist. Der den Fahrantrieb steuernde Drehschalter kann hierbei unmittelbar benachbart zu dem Griffabschnitt am stirnseitigen Ende des Griffabschnittes des Haltegriffes oder von dem Griffabschnitt axial beabstandet in der Verlängerung des Griffabschnittes des Haltegriffes angeordnet sein. Die Längsachse des Griffabschnittes des Haltegriffes und somit die Drehachse des Drehschalters für den Fahrantrieb entspricht hierbei einer im Wesentlichen horizontalen Querachse der Bedienkonsole. Mit einem derartigen als Daumenrad ausgebildeten Bedienelement zur Steuerung des Fahrantriebs kann der Fahrantrieb in ergonomisch günstiger Weise von dem Daumen der den Griffabschnitt des Haltegriffes umgreifenden Hand in beiden Bewegungsrichtungen des Flurförderzeugs betätigt werden.

Hinsichtlich einer günstigen Ergonomie ergeben sich Vorteile, wenn der Drehschalter mit beabstandeten Vorsprüngen versehen ist, zwischen denen eine Griffmulde für den Daumen der den Griffabschnitt des Haltegriffes umgreifenden Hand ausgebildet ist. Hierdurch kann der Drehschalter auf einfache Weise durch den in der Griffmulde liegenden Daumen der den Griffabschnitt des feststehenden Haltegriffes umgreifenden Hand in beiden Drehrichtungen betätigt werden.

Das Bedienelement zur Steuerung der zweiten Funktion ist gemäß einer bevorzugten Ausführungsform der Erfindung an einer der Bedienperson abgewandten Seite des Griffabschnittes des Haltegriffes angeordnet. Der Haltegriff begrenzt bei der erfindungsgemäßen Bedienkonsole eine Grifföffnung für die Hand der Bedienperson, wobei das Bedienelement zur Steuerung der Lasthandhabungsfunktion an der der Bedienperson abgewandten Seite des Griffabschnittes und somit der der Bedienperson zugewandten Seite der Grifföffnung angeordnet ist. Hierdurch kann das Bedienelement zur Steuerung der Lasthandhabungsfunktion von dem Zeigefinger und/oder dem Mittelfinger der den Griffabschnitt umgreifenden Hand ohne Abspreizen des Zeigefingers und/oder Mittelfingers und somit unter Beibehaltung der Festhalteposition der den Griffabschnitt des feststehenden Haltegriffes umgreifenden Hand in ergonomischer Weise betätigt werden.

Das Bedienelement zur Steuerung der zweiten Funktion kann hierbei gemäß einer zweckmäßigen Ausgestaltungsform der Erfindung von mindestens einem Tastschalter gebildet sein. Mit einem ersten Tastschalter, der beispielsweise die Hebenfunktion des Hubantriebs steuert, und einem zweiten Tastschalter, der die Senkenfunktion des Hubantriebs steuert, wobei beide Tastschalter in den Griffabschnitt des Haltegriffes integriert sind, kann in ergonomischer Weise die Lasthandhabungsfunktion mit einem den Griffabschnitt des Haltegriffes umgreifenden Zeigefinger und/oder Mittelfinger betätigt werden.

Die Betätigungsachsen der Tastschalter sind hierbei bevorzugt senkrecht zur Längsachse des Griffabschnittes in einer im Wesentlichen horizontalen Betätigungsebene angeordnet, wodurch sich eine ergonomische Betätigung der Tastschalter durch Drücken mit dem den Griffabschnitt des Haltegriffs umgreifenden Zeigefinger und/oder Mittelfinger erzielen lässt.

Das Bedienelement zur Steuerung der zweiten Funktion kann gemäß einer weiteren vorteilhaften Ausgestaltungsform der Erfindung als Wippschalter ausgebildet sein. Mit einem derartigen Wippschalter, der in den Griffbereich des Haltegriffes integriert ist, kann ebenfalls eine ergonomische Betätigung der Hebenfunktion sowie der Senkenfunktion des Hubantriebs von dem den Griffabschnitt des Haltegriffes umgreifenden Zeigefinger und/oder Mittelfinger erzielt werden.

Zudem kann das Bedienelement zur Steuerung der zweiten Funktion gemäß einer zweckmäßigen Ausgestaltungsform der Erfindung als Drehschalter ausgebildet sein. Mit einem in den Griffabschnitt des Haltegriffes integrierten Drehschalter können ebenfalls die Hebenfunktion und die Senkenfunktion des Hubantriebs mit dem Zeigefinger und/oder dem Mittelfinger, die den Griffabschnitt des Haltegriffes umgreifen, betätigt werden.

Das als Wippschalter oder Drehschalter ausgebildete Bedienelement zur Steuerung der Lasthandhabungsfunktion weist hierbei zweckmäßigerweise eine Drehachse auf, die senkrecht zur Längsachse des Griffabschnittes in einer im Wesentlichen vertikalen Betätigungsebene angeordnet ist. Die Drehachse des Wippschalters bzw. des Drehschalters für den Hubantrieb entspricht somit einer im Wesentlichen vertikalen Hochachse, wodurch eine ergonomische Betätigung durch den Zeigefinger und/oder den Mittelfinger der den Griffabschnitt des Haltegriffs umgreifenden Hand erzielbar ist.

Das Bedienelement zur Steuerung der zweiten Funktion weist zweckmäßigerweise beabstandete Vorsprünge auf, zwischen denen eine Griffmulde für den Zeigefinger und/oder Mittelfinger der den Griffabschnitt des Haltegriffes umgreifenden Hand ausgebildet ist oder die mit Betätigungsflächen für den Zeigefinger und/oder Mittelfinger der den Griffabschnitt des Haltegriffes umgreifenden Hand versehen sind. Ein als Wippschalter oder Drehschalter ausgebildetes Bedienelement zur Steuerung der Lasthandhabungsfunktion kann hierbei in ergonomischer Weise durch den in der Griffmulde liegenden Zeigefinger und/oder Mittelfinger oder durch den auf den Betätigungsflächen der Vorsprünge aufliegenden Zeigefinger und/oder Mittelfinger betätigt werden.

Gemäß einer vorteilhaften Weiterbildung der Erfindung ist an der Bedienkonsole zumindest ein weiteres Bedienelement, insbesondere ein Hupentastschalter, angeordnet, der bei einer den Griffabschnitt umschließenden Hand mit abgespreizten Zeigefinger und/oder Mittelfinger betätigbar ist. Ein Hupentastschalter kann somit auf einfache und ergonomische Weise durch einen abgespreizten Zeigefinger und /oder Mittelfinger der den Griffabschnitt des Haltegriffes umgreifenden Hand betätigt werden.

Das weitere Bedienelement ist hierbei zweckmäßigerweise an einer der Bedienperson abgewandten Seite einer Grifföffnung der Bedienkonsole angeordnet. Bei einer derartigen Anordnung kann das weitere Bedienelement auf einfache Weise durch Abspreizen des Zeigefingers und/oder des Mittelfingers der den Griffabschnitt umgreifenden Hand erreicht und betätigt werden.

Zweckmäßigerweise ist hierbei das weitere Bedienelement in einer Vertiefung der Bedienkonsole angeordnet. Hierdurch wird erzielt, dass das weitere Bedienelement niedriger als der Griffabschnitt des Haltegriffes angeordnet ist. Die mit dem Haltegriff versehene Bedienkonsole ist zwischen der Gürtellinie und dem Brustbereich einer Bedienperson angeordnet. Durch die gegenüber dem Griffabschnitt des Haltegriffes tiefer liegende Anordnung des weiteren Bedienelements kann hierbei das Bedienelement durch einfaches Abspreizen des Zeigefingers und/oder des Mittelfingers erreicht und in sicherer Weise betätigt werden.

An der Bedienkonsole kann gemäß einer zweckmäßigen Weiterbildung der Erfindung weiterhin ein Notausschalter angeordnet sein.

Der Notausschalter ist hierbei wie das weitere Bedienelement an einer der Bedienperson abgewandten Seite der Grifföffnung angeordnet. Der beispielsweise als Schlagtaster ausgebildete Notausschalter kann somit in schneller Weise durch Loslassen der den Griffabschnitt des Haltegriffs umgreifenden Hand erreicht und betätigt werden.

Die Erfindung betrifft weiterhin ein Bedienpult mit einer erfindungsgemäßen Bedienkonsole.

Sofern das Bedienpult mit einem Lenkbetätigungselement und/oder einer Anzeigeeinheit und/oder einem Mittel zur Dateneingabe, insbesondere eine Tastatur, versehen ist, können sämtliche Bedienelemente für das Flurförderzeug an dem Bedienpult vereinigt werden, wobei durch die erfindungsgemäße Bedienkonsole des Bedienpultes bei der gleichzeitigen Betätigung der Lasthandhabungsfunktion sowie des Fahrantriebs eine sichere Festhaltefunktion erzielt wird, die einen sicheren und dauerhaften Halt der Bedienperson ermöglicht.

Weitere Vorteile und Einzelheiten der Erfindung werden anhand der in den schematischen Figuren dargestellten Ausführungsbeispiele näher erläutert. Hierbei zeigen
- Figur 1: eine erfindungsgemäße Bedienkonsole und
- Figur 2: ein Bedienpult mit einer erfindungsgemäßen Bedienkonsole.

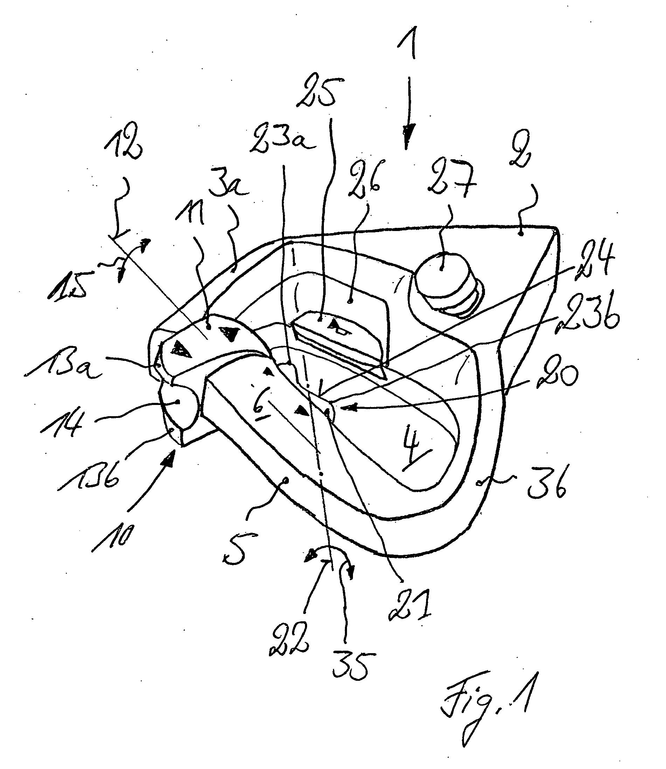

In der Figur 1 ist eine erfindungsgemäße Bedienkonsole 1 eines Flurförderzeugs in einer perspektivischen Darstellung dargestellt. Die Bedienkonsole 1 weist einen Tragabschnitt 2 auf, der in seitliche Schenkelabschnitte 3a, 3b übergeht, wobei die seitlichen Schenkelabschnitte 3a, 3b unter Ausbildung einer Grifföffnung 4 mit einem Haltegriff 5 verbunden sind, an dem ein Griffabschnitt 6 ausgebildet ist.

Der Tragabschnitt 2 befindet sich hierbei an einer der Bedienperson abgewandten Seite und der Haltegriff 5 an einer der Bedienperson zugewandten Seite.

An der Bedienkonsole 1 ist ein Bedienelement 10 einer ersten Funktion, insbesondere des Fahrantriebs, des Flurförderzeugs angeordnet, das als Drehschalter 11 ausgebildet ist, der an dem stirnseitigen Ende des Griffabschnittes 6 des Haltegriffes 5 angeordnet ist. Der Drehschalter 11 ist hierbei um eine parallel oder bevorzugterweise koaxial zu einer Längsachse des Haltegriffes 5 angeordneten Drehachse 12 - wie durch den Pfeil 15 verdeutlicht - zu beiden Seiten betätigbar. Die Drehachse 12 befindet sich hierbei in einer von der Zeichenebene gebildeten im Wesentlichen horizontalen Betätigungsebene. Der Drehschalter 11 ist hierbei an dem der Bedienperson zugewandten Seite mit zwei vertikal beabstandeten Vorsprüngen 13a, 13b versehen, zwischen denen eine Griffmulde 14 für den Daumen einer den Griffabschnitt 6 umgreifenden Hand der Bedienperson ausgebildet ist.

Erfindungsgemäß ist an dem Griffabschnitt 6 des Haltegriffes 5 ein Bedienelement 20 zur Steuerung einer zweiten Funktion des Flurförderzeugs angeordnet, insbesondere einer als Hubantrieb ausgebildeten Lasthandhabungsfunktion. Das Bedienelement 20 ist hierbei an der der Bedienperson abgewandten Seite des Griffabschnittes 6 und somit an einer der Bedienperson zugewandten Seite der Grifföffnung 4 derart angeordnet, dass das Bedienelement 20 mit dem Zeigefinger und/oder dem Mittelfinger der den Griffabschnitt 6 umgreifenden Hand und somit mit dem den Griffabschnitt 6 des Haltegriffes 5 umgreifenden Zeigefinger und/oder Mittelfinger betätigt werden kann.

Das Bedienelement 20 ist hierbei als Wippschalter 21 ausgebildet, der um eine Drehachse 22 - wie durch den Pfeil 35 verdeutlicht - zu beiden Seiten betätigbar ist. Die Drehachse 22 des Wippschalters 21 ist hierbei senkrecht zu der Längsachse des Haltegriffes 5 und somit senkrecht zur Drehachse 12 des Drehschalters 11 in einer im Wesentlichen vertikalen Betätigungsebene angeordnet.

Der Tastschalter 21 ist hierbei mit zwei in axialer Richtung des Haltegriffes 6 und somit seitlich beabstandeten Vorsprüngen 23a, 23b versehen. Zwischen den Vorsprüngen 23a, 23b ist eine Griffmulde 24 für den den Griffabschnitt 6 umgreifenden Zeigefinger und/oder Mittelfinger der sich an dem Haltegriff 5 festhaltenden Hand der Bedienperson ausgebildet. Alternativ oder zusätzlich können an den Vorsprüngen 23a, 23b Betätigungsflächen für den den Griffabschnitt 6 umgreifenden Zeigefinger und/oder Mittelfinger der sich an dem Haltegriff 5 festhaltenden Hand der Bedienperson ausgebildet werden.

An der Bedienkonsole 1 ist an dem Tragabschnitt 2 ein weiteres Bedienelement 25, beispielsweise ein Hupentastschalter, angeordnet, der von der den Griffabschnitt 6 umgreifenden Hand mit einem abgespreizten Zeigefinger und/oder einem abgespreizten Mittelfinger erreichbar und betätigbar ist. Das Bedienelement 25 ist hierbei an der der Bedienperson abgewandten Seite der Grifföffnung 4 der Bedienkonsole 1 in einer Vertiefung 26 angeordnet, so dass das Bedienelement 25 tiefer als der Haltegriff 5 und die an dem Haltegriff 5 angeordneten Bedienelemente 10, 20 ist.

An dem Tragabschnitt 2 und somit an der der Bedienperson abgewandten Seite der Grifföffnung 4 ist weiterhin ein als Schlagschalter ausgebildeter Notausschalter 27 angeordnet.

Durch die erfindungsgemäße Anordnung des Bedienelements 21 an dem Griffabschnitt 6 des Haltegriffes 5 kann das Bedienelement 20 von dem den Griffabschnitt 6 des Haltegriffes 5 umgreifenden Zeigefinger und/oder Mittelfinger betätigt werden. Bei einer erfindungsgemäßen Bedienkonsole 1 kann somit die Bedienperson mit der den Griffabschnitt 6 des Haltegriffes 5 umgreifenden Hand gleichzeitig mit dem von dem Daumen betätigten, als Drehschalter 11 ausgebildeten Bedienelement 10 den Fahrantrieb und mit dem von dem Zeigefinger und/oder dem Mittelfinger betätigten, als Wippschalter 21 ausgebildeten Bedienelement 20 den Hubantrieb steuern ohne den Zeigefinger und/oder Mittelfinger abspreizen zu müssen, so dass bei der gleichzeitigen Betätigung des Fahrantriebs und des Hubantriebs ein sicherer Halt der Bedienperson und somit eine verbesserte Festhaltemöglichkeit für die Bedienperson erzielbar ist.

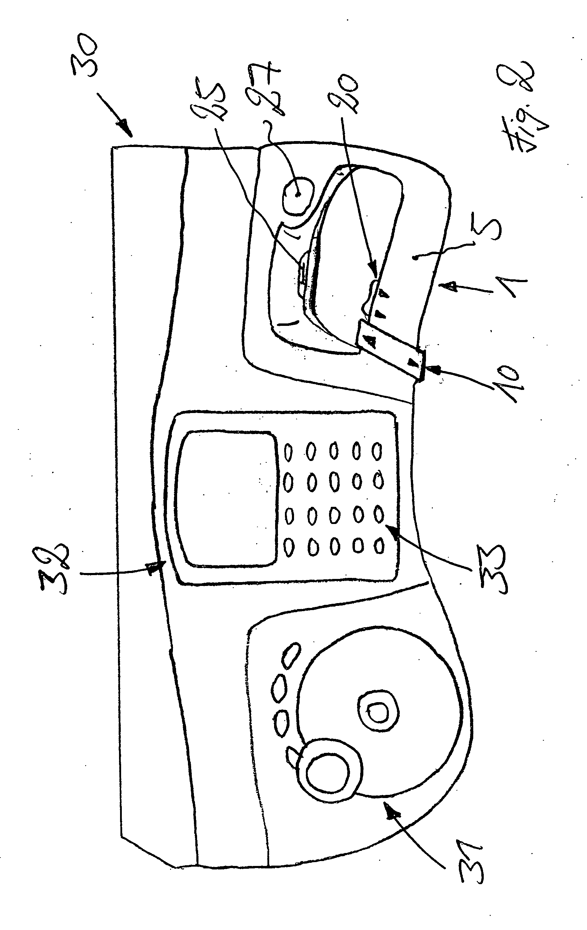

Die erfindungsgemäße Bedienkonsole 1 ist hierbei Bestandteil eines in der Figur 2 dargestellten Bedienpultes 30. Das Bedienpult 30 ist weiterhin mit einem als Lenkrad ausgeführten Lenkbetätigungselement 31 und einer von einem Bildschirm gebildeten Anzeigeeinheit 32 versehen. Zudem ist an der Bedienkonsole 30 ein als Tastatur ausgebildetes Mittel 33 zur Dateneingabe ausgebildet. Das Lenkbetätigungselement 31 kann hierbei von einer vor dem Bedienpult stehenden Bedienperson mit der linken Hand betätigt werden. Mit der rechten Hand kann sich die Bedienperson an dem Haltegriff 5 der Bedienkonsole 1 festhalten und ohne die Festhalteposition verändern oder den Haltegriff 5 loslassen zu müssen mit dem rechten Daumen das Bedienelement 10 und somit den Fahrantrieb und mit dem rechten Zeigefinger und/oder Mittelfinger das Bedienelement 20 und somit den Hubantrieb des Flurförderzeugs steuern.

Das Bedienpult 30 gemäß der Figur 2 kann hierbei bei einem als Kommissioniergerät ausgebildeten Flurförderzeug mit einem anhebbaren Bedienplatz lastseitig oder hubgerüstseitig angeordnet sein. Bei der hubgerüstseitigen Anordnung des Bedienpultes 30 blickt die Bedienperson in Richtung eines Antriebsteils des Flurförderzeugs. Bei der lastseitigen Anordnung des Bedienpultes 30 befindet sich das Bedienpult 30 zwischen der Bedienperson und einem Lastaufnahmemittel.

## Patentansprüche

1. Bedienkonsole (1) für ein als Kommissioniergerät ausgebildetes Flurförderzeug, wobei die Bedienkonsole (1) an einem Bedienplatz einer Bedienperson des Flurförderzeugsangeordnet ist und die Bedienkonsole (1) mit einem Bedienelement (10) zur Steuerung eines Fahrantriebs als erste Funktion des Flurförderzeugsund mindestens einem Bedienelement (20) zur Steuerung einer von einem Hubantrieb gebildeten Lasthandhabungsfunktion als zweite Funktion des Flurförderzeugs, sowie mit einem feststehenden Haltegriff (5) versehen ist, wobei das Bedienelement(10) zur Steuerung des Fahrantriebs mit dem Daumen einer einen Griffabschnitt (6) des Haltegriffes (5) umgreifenden Hand betätigbar ist, **dadurch gekennzeichnet, dass** in dem Griffabschnitt (6) des feststehenden Haltegriffs (5) das Bedienelement (20) zur Steuerung der von dem Hubantrieb gebildeten Lasthandhabungsfunktion derart angeordnet ist, dass das Bedienelement (20) zur Steuerung der von dem Hubantrieb gebildeten Lasthandhabungsfunktion von dem den Griffabschnitt (6) des Haltegriffs (5) umgreifenden Zeigefinger und/oder dem Mittelfinger der den Griffabschnitt (6) des Haltegriffs (5) umgreifenden Hand betätigbar ist ohne eine Festhalteposition der den Griffabschnitt des Haltegriffes umgreifenden Hand verändern oder verlassen zu müssen, so dass die Bedienperson mit der den Griffabschnitt (6) des feststehenden Haltegriffs (5) umgreifenden Hand gleichzeitig den Fahrantrieb und den Hubantrieb steuern kann.

2. Bedienkonsole nach Anspruch 1, **dadurch gekennzeichnet, dass** das Bedienelement (10) zur Steuerung der ersten Funktion als Drehschalter (11) ausgebildet ist, dessen Drehachse (12) im Wesentlichen koaxial oder parallel zur Längsachse des Griffabschnittes (6) des Haltegriffes (5) in einer im Wesentlichen horizontalen Betätigungsebene angeordnet ist.

3. Bedienkonsole nach Anspruch 2, **dadurch gekennzeichnet, dass** der Drehschalter (11) mit beabstandeten Vorsprüngen (13a; 13b) versehen ist, zwischen denen eine Griffmulde (14) für den Daumen der den Griffabschnitt (6) des Haltegriffes (5) umgreifenden Hand ausgebildet ist.

4. Bedienkonsole nach einem der Ansprüche 1 bis 3, **dadurch gekennzeichnet, dass** das Bedienelement (20) zur Steuerung der zweiten Funktion an einer der Bedienperson abgewandten Seite des Griffabschnittes (6) des Haltegriffes (5) angeordnet ist.

5. Bedienkonsole nach Anspruch 4, **dadurch gekennzeichnet, dass** das Bedienelement (20) zur Steuerung der zweiten Funktion von mindestens einem Tastschalter gebildet ist.

6. Bedienkonsole nach Anspruch 5, **dadurch gekennzeichnet, dass** die Betätigungsachse des Tastschalters senkrecht zur Längsachse des Griffabschnittes (6) in einer im Wesentlichen horizontalen Betätigungsebene angeordnet ist.

7. Bedienkonsole nach Anspruch 4, **dadurch gekennzeichnet, dass** das Bedienelement (20) zur Steuerung der zweiten Funktion als Wippschalter (21) ausgebildet ist.

8. Bedienkonsole nach Anspruch 4, **dadurch gekennzeichnet, dass** das Bedienelement (20) zur Steuerung der zweiten Funktion als Drehschalter ausgebildet ist.

9. Bedienkonsole nach Anspruch 7 oder 8, **dadurch gekennzeichnet, dass** das Bedienelement (20) zur Steuerung der zweiten Funktion eine Drehachse (22) aufweist, die senkrecht zur Längsachse des Griffabschnittes (6) in einer im Wesentlichen vertikalen Betätigungsebene angeordnet ist.

10. Bedienkonsole nach einem der Ansprüche 4 bis 9, **dadurch gekennzeichnet, dass** das Bedienelement (20) zur Steuerung der zweiten Funktion beabstandete Vorsprünge (23a; 23b) aufweist, zwischen denen eine Griffmulde (24) für den Zeigefinger und/oder Mittelfinger der den Griffabschnitt (6) des Haltegriffes (5) umgreifenden Hand ausgebildet ist oder die mit Betätigungsflächen für den Zeigefinger und/oder Mittelfinger der den Griffabschnitt (6) des Haltegriffes (5) umgreifenden Hand versehen sind.

11. Bedienkonsole nach einem der Ansprüche 1 bis 10, **dadurch gekennzeichnet, dass** an der Bedienkonsole (1) zumindest ein weiteres Bedienelement (25), insbesondere ein Hupentastschalter, angeordnet ist, der bei einer den Griffabschnitt (6) des Haltegriffes (5) umschließenden Hand mit abgespreizten Zeigefinger und/oder Mittelfinger betätigbar ist.

12. Bedienkonsole nach Anspruch 11, **dadurch gekennzeichnet, dass** das weitere Bedienelement (25) an einer der Bedienperson abgewandten Seite einer Grifföffnung (4) der Bedienkonsole (1) angeordnet ist.

13. Bedienkonsole nach Anspruch 11 oder 12, **dadurch gekennzeichnet, dass** das weitere Bedienelement (25) in einer Vertiefung (26) der Bedienkonsole (1) angeordnet ist.

14. Bedienkonsole nach einem der Ansprüche 1 bis 13, **dadurch gekennzeichnet, dass** an der Bedienkonsole (1) ein Notausschalter (27) angeordnet ist.

15. Bedienkonsole nach Anspruch 14, **dadurch gekennzeichnet, dass** der Notausschalter (27) an einer der Bedienperson abgewandten Seite einer Grifföffnung (4) angeordnet ist.

16. Bedienpult (30) mit einer Bedienkonsole (1) nach einem der vorangegangenen Ansprüche.

17. Bedienpult nach Anspruch 16, **dadurch gekennzeichnet, dass** das Bedienpult (30) mit einem Lenkbetätigungselement (31) und/oder einer Anzeigeeinheit (32) und/oder einem Mittel (33) zur Dateneingabe, insbesondere eine Tastatur, versehen ist.

## Claims

1. Operating console (1) for an industrial truck embodied as a stockpicker device, wherein the operating console (1) is arranged at an operator station of an operator of the industrial truck, and the operating console (1) is provided with an operating element (10) for controlling a traction drive as a first function of the industrial truck and at least one operating element (20) for controlling a load-handling function, formed by a lifting drive, as a second function of the industrial truck, and with a fixed handle (5), wherein the operating element (10) can be actuated to control the traction drive with the thumb of a hand which grips a gripping section (6) of the handle (5),
**characterized in that** the operating element (20) for controlling the load-handling function formed by the lifting drive is arranged in the gripping section (6) of the fixed handle (5) in such a way that the operating element (20) can be actuated to control the load-handling function formed by the lifting drive by the index finger which grips the gripping section (6) of the handle (5) and/or the middle finger of the hand which grips the gripping section (6) of the handle (5), without having to change or leave a holding-tight position of the hand which grips the gripping section of the handle, with the result that the operator can use the hand which grips the gripping section (6) of the fixed handle (5) to control the traction drive and the lifting drive simultaneously.

2. Operating console according to Claim 1, **characterized in that** the operating element (10) is designed to control the first function as a rotary switch (11) whose rotational axis (12) is arranged essentially coaxially with respect to or parallel to the longitudinal axis of the gripping section (6) of the handle (5) in an essentially horizontal actuation plane.

3. Operating console according to Claim 2, **characterized in that** the rotary switch (11) is provided with spaced-apart projections (13a; 13b) between which a gripping recess (14) for the thumb of the hand which grips the gripping section (6) of the handle (5) is formed.

4. Operating console according to one of Claims 1 to 3, **characterized in that** the operating element (20) for controlling the second function is arranged on a side of the gripping section (6) of the handle (5) which faces away from the operator.

5. Operating console according to Claim 4, **characterized in that** the operating element (20) for controlling the second function is formed by at least one pushbutton switch.

6. Operating console according to Claim 5, **characterized in that** the actuation axis of the pushbutton switch is arranged perpendicularly with respect to the longitudinal axis of the gripping section (6), in an essentially horizontal actuation plane.

7. Operating console according to Claim 4, **characterized in that** the operating element (20) is designed to control the second function as a rocker switch (21).

8. Operating console according to Claim 4, **characterized in that** the operating element (20) is designed to control the second function as a rotary switch.

9. Operating console according to Claim 7 or 8, **characterized in that** the operating element (20) for controlling the second function has a rotational axis (22) which is arranged perpendicularly with respect to the longitudinal axis of the gripping section (6), in an essentially vertical actuation plane.

10. Operating console according to one of Claims 4 to 9, **characterized in that** the operating element (20) for controlling the second function has spaced-apart projections (23a; 23b) between which a gripping recess (24) for the index finger and/or middle finger of the hand which grips the gripping section (6) of the handle (5) is formed or which are provided with actuation faces for the index finger and/or middle finger of the hand which grips the gripping section (6) of the handle (5).

11. Operating console according to one of Claims 1 to 10, **characterized in that** at least one further operating element (25), in particular a horn button switch, which can be actuated with a spread-apart index finger and/or middle finger when there is a hand surrounding the gripping section (6) of the handle (5), is arranged on the operating console (1).

12. Operating console according to Claim 11, **characterized in that** the further operating element (25) is arranged on a side of a gripping opening (4) in the operating console (1) which faces away from the operator.

13. Operating console according to Claim 11 or 12, **characterized in that** the further operating element (25) is arranged in a depression (26) in the operating console (1).

14. Operating console according to one of Claims 1 to 13, **characterized in that** an emergency off switch (27) is arranged on the operating console (1).

15. Operating console according to Claim 14, **characterized in that** the emergency off switch (27) is arranged on a side of a gripping opening (4) which faces away from the operator.

16. Operator control panel (30) having an operating console (1) according to one of the preceding claims.

17. Operator control panel according to Claim 16, **characterized in that** the operator control panel (30) is provided with a steering actuation element (31) and/or a display unit (32) and/or a means (33) for inputting data, in particular a keypad.

## Revendications

1. Console de commande (1) pour chariot élévateur configuré comme appareil de préparation de colis,
la console de commande (1) étant disposée sur un emplacement de commande d'un opérateur du chariot élévateur et la console de commande (1) étant dotée d'un élément de commande (10) qui commande l'entraînement de déplacement comme première fonction du chariot élévateur et au moins un élément de commande (20) qui commande une fonction de manutention de charge, formée par un entraînement de levage, comme deuxième fonction du chariot élévateur, ainsi que d'une poignée fixe (5),
l'élément de commande (10) servant à commander l'entraînement de déplacement pouvant être actionné par le pouce d'une main qui entoure une partie de saisie (6) de la poignée (5),
**caractérisée en ce que**
l'élément de commande (20) qui commande la fonction de manutention de charge formée par l'entraînement de levage est disposé dans la partie de saisie (6) de la poignée fixe (5) de telle sorte que l'élément de commande (20) puisse être actionné par l'index et/ou le majeur entourant la partie de saisie (6) de la poignée (5) de la main qui entoure la partie de saisie (6) de la poignée (5) pour commander la fonction de manutention de charge formée par l'entraînement de levage sans devoir modifier ou quitter une position fixe de la main qui entoure la partie de saisie de la poignée, de telle sorte que l'opérateur puisse commander en même temps l'entraînement de déplacement et l'entraînement de levage par la main qui entoure la partie de saisie (6) de la poignée fixe (5).

2. Console de commande selon la revendication 1, **caractérisée en ce que** l'élément de commande (10) qui commande la première fonction est configuré comme commutateur rotatif (11) dont l'axe de rotation (12) est disposé essentiellement coaxialement ou parallèlement à l'axe longitudinal de la partie de saisie (6) de la poignée (5) dans un plan essentiellement horizontal d'actionnement.

3. Console de commande selon la revendication 2, **caractérisée en ce que** le commutateur rotatif (11) est doté de saillies (13a, 13b) situées à distance mutuelle et entre lesquelles une moulure de saisie (14) est formée pour le pouce de la main qui entoure la partie de saisie (6) de la poignée (5).

4. Console de commande selon l'une des revendications 1 à 3, **caractérisée en ce que** l'élément de commande (20) qui commande la deuxième fonction est disposé sur un côté de la partie de saisie (6) de la poignée (5) non tourné vers l'opérateur.

5. Console de commande selon la revendication 4, **caractérisée en ce que** l'élément de commande (20) qui commande la deuxième fonction est formé par au moins un commutateur à touches.

6. Console de commande selon la revendication 5, **caractérisée en ce que** l'axe d'actionnement du commutateur à touches est disposé perpendiculairement à l'axe longitudinal de la partie de saisie (6), dans un plan d'actionnement essentiellement horizontal.

7. Console de commande selon la revendication 4, **caractérisée en ce que** l'élément de commande (20) qui commande la deuxième fonction est configuré comme commutateur à balai (21).

8. Console de commande selon la revendication 4, **caractérisée en ce que** l'élément de commande (20) qui commande la deuxième fonction est configuré comme commutateur rotatif.

9. Console de commande selon l'une des revendications 7 ou 8, **caractérisée en ce que** l'élément de commande (20) qui commande la deuxième fonction présente un axe de rotation (22) disposé perpendiculairement à l'axe longitudinal de la partie de saisie (6) dans un plan d'actionnement essentiellement vertical.

10. Console de commande selon l'une des revendications 4 à 9, **caractérisée en ce que** l'élément de commande (20) qui commande la deuxième fonction présente des saillies (23a, 23b) situées à distance mutuelle et entre lesquelles une moulure de saisie (24) est formée pour l'indexe et/ou le majeur de la main qui entoure la partie de saisie (6) de la poignée (5) ou qui sont dotées d'une surface d'actionnement pour l'indexe et/ou le médium de la main qui entoure la partie de saisie (6) de la poignée (5).

11. Console de commande selon l'une des revendications 12 à 10, **caractérisée en ce qu'**au moins un autre élément de commande (25), en particulier un commutateur à touches de klaxon qui peut être actionné par le majeur déployé de la main qui entoure la partie de saisie (6) de la poignée (5) est disposé sur la console de commande (1).

12. Console de commande selon la revendication 11, **caractérisée en ce que** l'autre élément de commande (25) est disposé sur un côté d'une ouverture de saisie (4) de la console de commande (1) non tourné vers l'opérateur.

13. Console de commande selon les revendications 11 ou 12, **caractérisée en ce que** l'autre élément de commande (25) est disposé dans un creux (26) de la console de commande (1).

14. Console de commande selon l'une des revendications 1 à 13, **caractérisée en ce qu'**un commutateur de débranchement d'urgence (27) est disposé sur la console de commande (1).

15. Console de commande selon la revendication 14, **caractérisée en ce que** le commutateur de déclenchement d'urgence (27) est disposé sur un côté d'une ouverture de saisie (4) non tourné vers l'opérateur.

16. Pupitre de commande (30) doté d'une console de commande (1) selon l'une des revendications précédentes.

17. Pupitre de commande selon la revendication 16, **caractérisé en ce que** le pupitre de commande (30) est doté d'un élément (31) d'actionnement de braquage et/ou d'une unité d'affichage (32) et/ou d'un moyen (33) d'introduction de données, en particulier un clavier.
